# EUROPEAN PATENT APPLICATION

(11) **EP 0 999 429 A1**
(43) Date of publication of application: **10.05.2000**
(21) Application number: 99308802.0
(22) Date of filing: 04.11.1999
(51) Int. Cl.: G01B 11/00, B44B 1/00, G05B 19/42

(54) **Three-dimentional shape measuring instrument with laser scanner and digital camera**

(30) Priority: 05.11.1998 JP 33018998
(71) Applicant: Watanabe, Masahiro, Itabashi-ku, Tokyo (JP)
(72) Inventor: Watanabe, Masahiro, Itabashi-ku, Tokyo (JP)
(74) Representative: Waldren, Robin Michael

(57) **Abstract**

A three-dimensional shape measuring instrument includes a digital camera (17) adapted to photograph an object having a three-dimensional shape and to obtain an original pattern image. Also a laser three-dimensional measuring instrument (18) measures data of the object with a non-contact state. A calculation-complement software utilizes measuring data of the three-dimensional measuring instrument and photographed pattern data to uncertain line portion by measuring the laser three-dimensional measuring instrument and outline portion. Therefore, measuring instrument can measure a complete three-dimensional shape of the upper half of the body of a person or the like substantially having clear outline by using the digital camera (17) and laser three-dimensional measuring instrument (18) provided fixedly. Used with an automatic three-dimensional engraver for coins and cameos.

## Description

### BACKGROUND OF THE INVENTION

This invention relates to a shape-measuring instrument for three-dimensional object that can be used for a three-dimensional apparatus, computer graphics or the like.

A known three-dimensional measuring instrument is used as measuring instrument of three-dimensional object.

A known laser three-dimensional measuring instrument applies laser beam to object to a scanning line and measures three-dimensional data, so that it is difficult to measure three-dimensional data even if laser beam is irradiated at the shape angle. Moreover, concerning measuring the upper half of the body, if the output of laser is decreased up to a certain point which is not injurious to the eyes, it is difficult to measure it because laser is hard to be scattered when it is irradiated by the black part such as hair, eyebrows or the like.

Therefore, the usual laser three-dimensional measuring instrument uses the sensor which can read the dispersion direction of the laser beam, however, it can be measured only the surfaces that the laser beam hit aspect and the sensor can recognize and an outline portion can not be measured to become a sharp line. In addition, the usual measuring instrument can not measure a three-dimensional shape such as person's upper half of the body with the neat outline completely.

### SUMMARY OF THE INVENTION

In view of the foregoing, it is an object of the present invention to provide a measuring instrument of a three-dimensional object which can measure a complete three-dimensional shape of the upper half of the body of a person or the like substantially having clear outerline by using the digital camera and laser three-dimensional measuring instrument provided fixedly.

The above and further objects and novel features of the invention will more fully appear from the following detailed description when the same is read in connection with the accompanying drawings.

It is to be expressly understood, however, that the drawing is for the purpose of illustration only and is not intended as a definition of the limits of the invention.

### BRIEF DESCRIPTION OF THE DRAWINGS

FIG. 1 is a front view in use;
FIG. 2 is a side view in use;
FIG. 3 is a plan view in use;
FIG. 4 is a schematic explanatory view in use;
FIG. 5 is a block diagram in use;
FIG. 6 is a schematic explanatory view showing a first embodiment of the present invention;
FIG. 7 is a block diagram showing a first embodiment of the present invention;
FIG. 8 is an explanatory view of an automatic three-dimensional engraving device showing a first embodiment of the present invention;
FIG. 9 is an explanatory view of a supply device for a three-dimensional object showing a first embodiment of the present invention:
FIG. 10 is an explanatory view of a manipulator showing a first embodiment of the present invention;
Fig. 11 is a front view of a three-dimensional object engraved with a three-dimension showing a first embodiment of the present invention;
FIG. 12 is a cross-sectional view taken on line 12-12 in FIG. 11;
FIG. 13 is a schematic explanatory view showing a second embodiment of the present invention;
FIG. 14 is a block diagram showing a second embodiment of the present invention;
FIG. 15 is a schematic explanatory view showing a third embodiment of the present invention;
FIG. 16 is a block diagram showing a third embodiment of the present invention;
FIG. 17 is a schematic explanatory view showing a fourth embodiment of the present invention; and
FIG. 18 is a block diagram showing a fourth embodiment of the present invention.

### DESCRIPTION OF THE REFERRED EMBODIMENT

Preferred embodiments of the present invention are described in more detail below referring to the accompanying drawings.

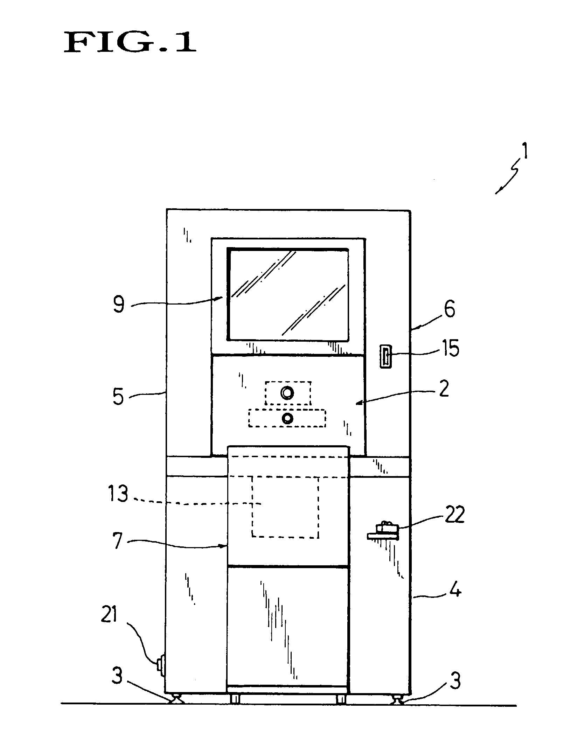

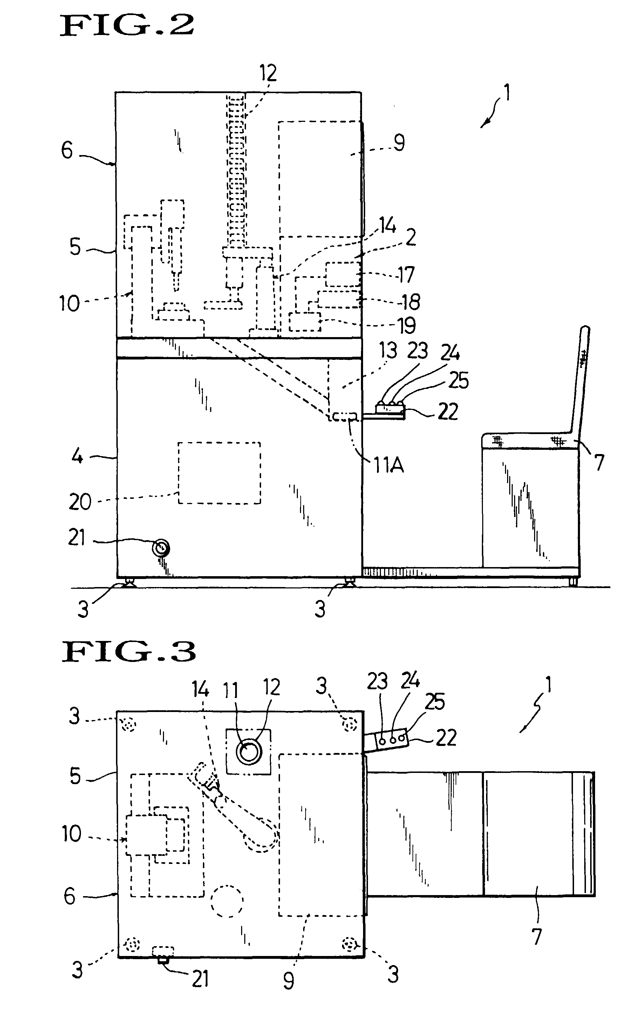

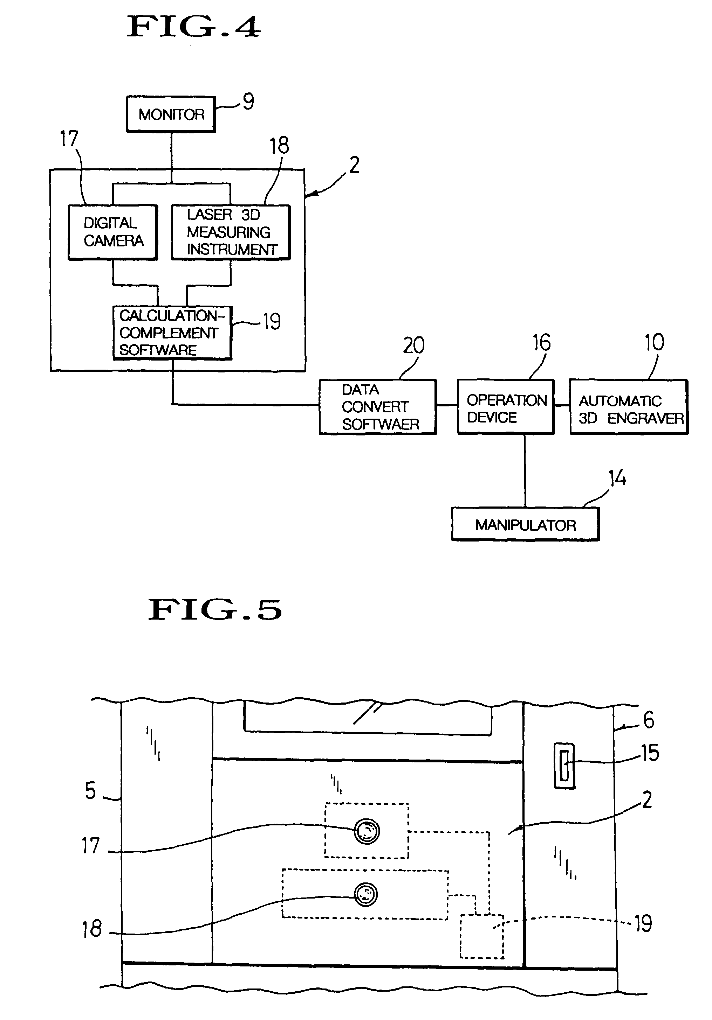

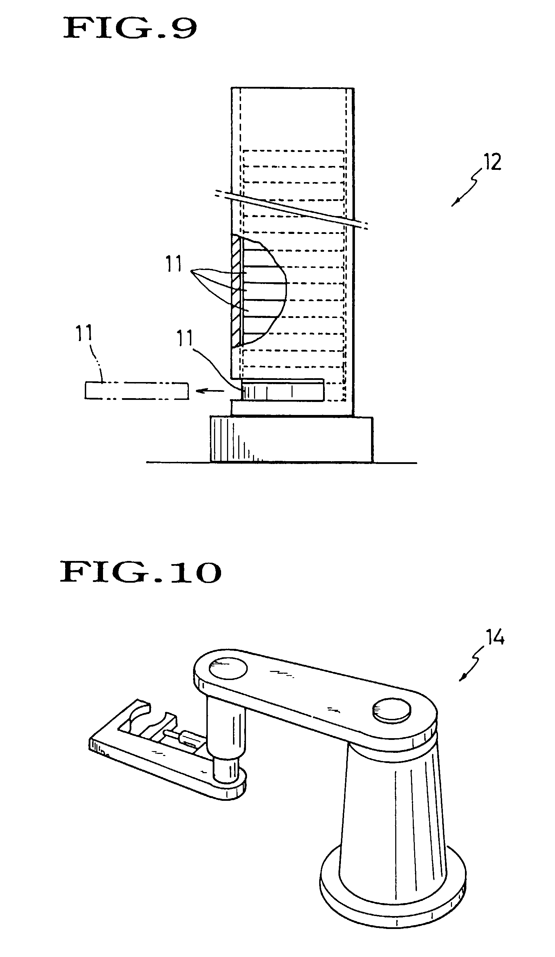

An understanding of the present invention may be best gained by reference FIGS. 1 to 18. FIGS. 1 to 12 illustrate a measuring instrument of a three-dimensional object of the first embodiment of the present invention.

Numeral 1 shows an automatic three-dimensional engraving apparatus having a three-dimensional shape measuring instrument 2 of the present invention. The automatic three-dimensional engraving apparatus 1 is composed of a case 6 having a lower case body 4 and an upper case body 5, a chair 7, the three-dimensional shape measuring instrument 2, a monitor 9, an automatic three-dimensional engraver 10, a manipulator 14 and an operation device 16.

In details, the case 6 is composed of the lower case body 4 having leg members 3,3,3,3, which are formed at a bottom face thereof, for adjusting its height of the case 6 and the upper case body 5 fixed integrally with an upper portion of the lower case body 4. The chair 7 is installed connectedly to the lower case body 4 such that it is located in front of the case 6 so as to face together. The three-dimensional shape measuring instrument 2 of the present invention detects the shape of the three-dimensional object as the upper half of the body of a person 8 who sat on the chair 7 provided with the lower case 4. The monitor 9 is installed into the upper case body 5 and displays the three-dimensional image of the upper half of the body of a person 8 as an object. The manipulator 14 is installed into the upper case body 5, supplying the solid sculpture body 11 such as coins, cameos or the like from a solid sculpture supply device 12 to the automatic three-dimensional engraver 10 and discharging the solid sculptured body 11A through an outlet 13 formed at the lower body 4 from the automatic three-dimensional engraver 10. The operation device 16 starts the measuring instrument 2, manipulator 14 and automatic three-dimensional engraver 10 automatically when the user throws the predetermined value of coins into a coin slot 15 provided in the front surface of the upper case body 5.

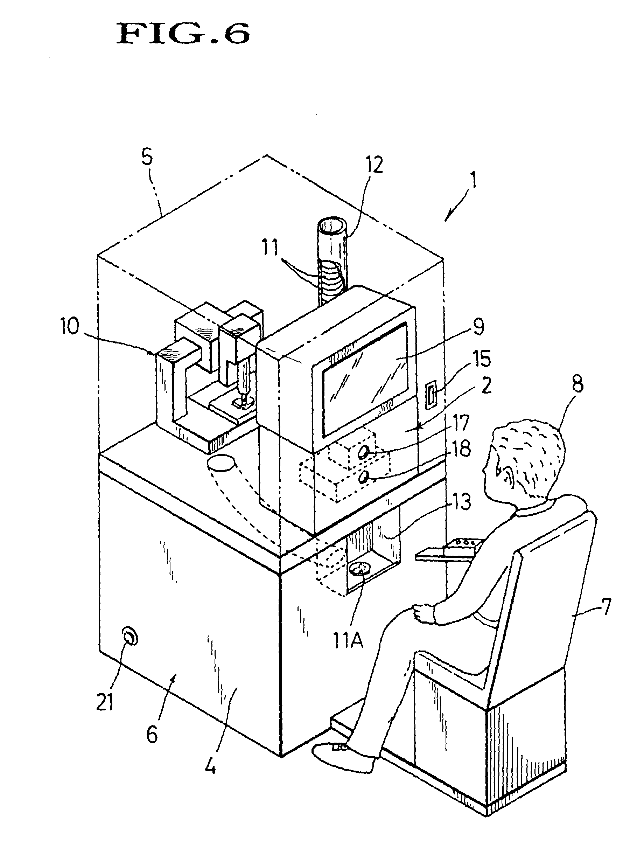

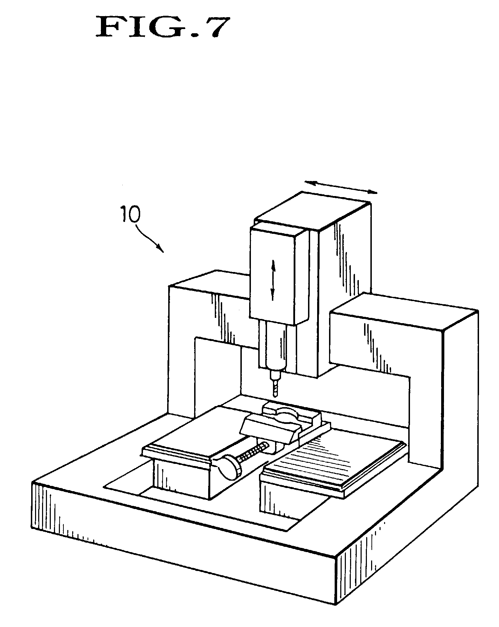

As shown in FIGS. 6 and 7, the measuring instrument 2 is composed of a digital camera 17, the laser three-dimensional measuring device 18 and a calculation-complement software 19.

The digital camera 17, which is on the market, installed into the upper case body 5 such that the digital camera 17 can photograph the upper half of the body of the person 8 sits on the chair 7. The laser three-dimensional measuring device 18, which is on the market, measures on the shape of the upper half of the body of the person 8 by projecting thereto a laser. The calculation-complement software 19 processes measuring data of the laser three-dimensional measuring device 18 and the photographed data of the digital camera 17 in case of the portion that uncertain measuring portion and/or outline portion by the laser three-dimensional measuring device 18. Then the calculation-complement software 19 is related connectedly to the digital camera 17 and laser three-dimensional measuring device 18.

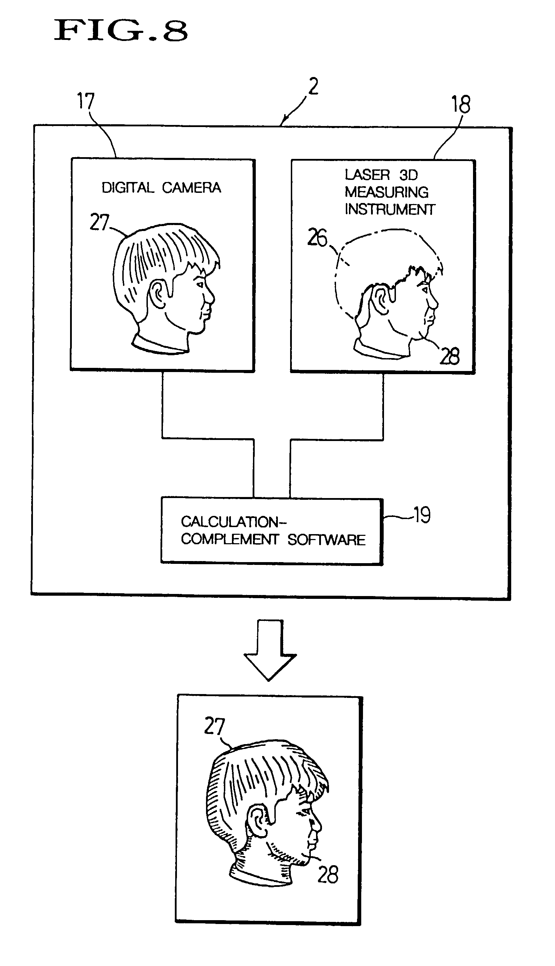

As shown in FIG. 8, the automatic three-dimensional engraver 10 provided at the upper case body 5 is used in the general engraver, which on the market, like "NC-5" of a desktop-type modeling device (manufactured and sold by Mimaki Engineering Co., Ltd.), so that a data converting software 20 which can covert from the measuring data into exclusive data for the engraver 10 is installed therein and interposed connectedly between the measuring instrument 2 and the engraver 10.

Moreover, the operating device 16 is composed of an ON/OFF switch 21, an operating switch for the measuring instrument 23, a cancel switch 24 and an OK switch 25. The operating switch 23, cancel switch 24 and OK switch 25 are provided on a switch box 22 installed at the lower case body 4.

The operation of the automatic three-dimensional engraving device of the above-mentioned structure is as follows:

First, the user sits on the chair 7, throws the predetermined value of coins into the coin slot 15 and pushes the operating switch 23. After that, the digital camera 17 of the measuring instrument 2 photographs the upper half of the body of the user sat on the chair 7, the shape of the upper half of the body is measured by the laser three-dimensional measuring device 18 and the three-dimensional data is collected.

Next, three-dimensional data is processed by calculation-complement software 19 by using the photographed data extracted from the digital camera 17 and data extracted from the laser three-dimensional measuring device 18. In this case, the image photographed by the digital camera 17 is displayed in the monitor 9.

Concerning the image that it is displayed on the monitor 9, when the user judges the image is all right, the user pushes the OK switch 25 as next step. Then, in the automatic three-dimensional engraver device 1, the three-dimensional shape data is converted to the exclusive data of the engraver 10, at the same time, the manipulator 14 works. After that, a solid sculpture body 11 is pinched by the manipulator 14 and supplied from the supply device 12 to the engraver 10.

Under this condition, the automatic three-dimensional engraver 10 starts based on the exclusive data of the engraver automatically, the engraver 10 engraves the solid sculpture body 11 with three-dimensional shape.

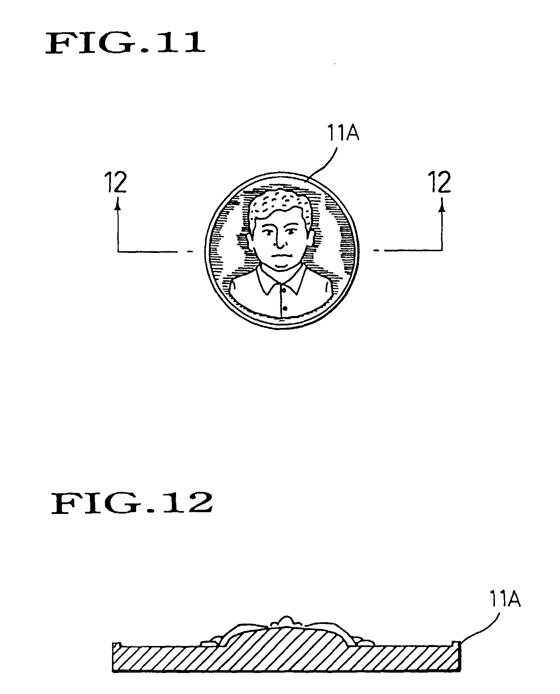

As shown in FIGS. 11 and 12, after the operation of the engraver 10 finishes, the manipulator 14 starts connectedly and conveys the solid sculptured body 11A from the engraver 10 to the outlet 13. Accordingly, the solid sculptured body 11A is discharged from the outlet 13.

### DIFFERENT REFERRED EMBODIMENT OF THE INVENTION

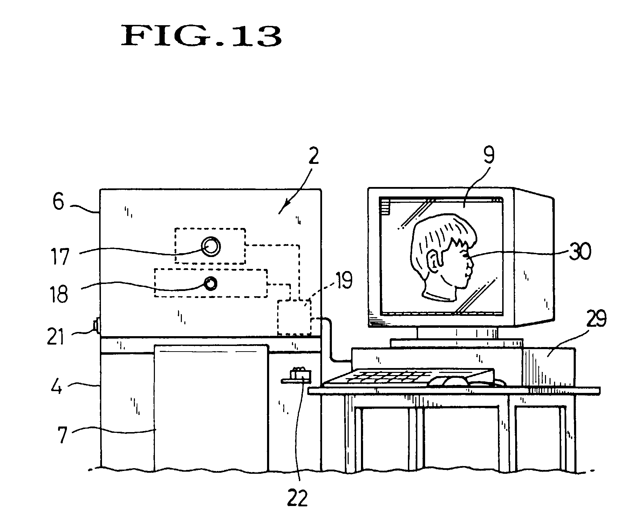

Other embodiments of the present invention will now be described referring to FIGS. 13 to 18. Through the drawings of the embodiments, like components are denoted by like numerals as of the first embodiment and will not be further explained.

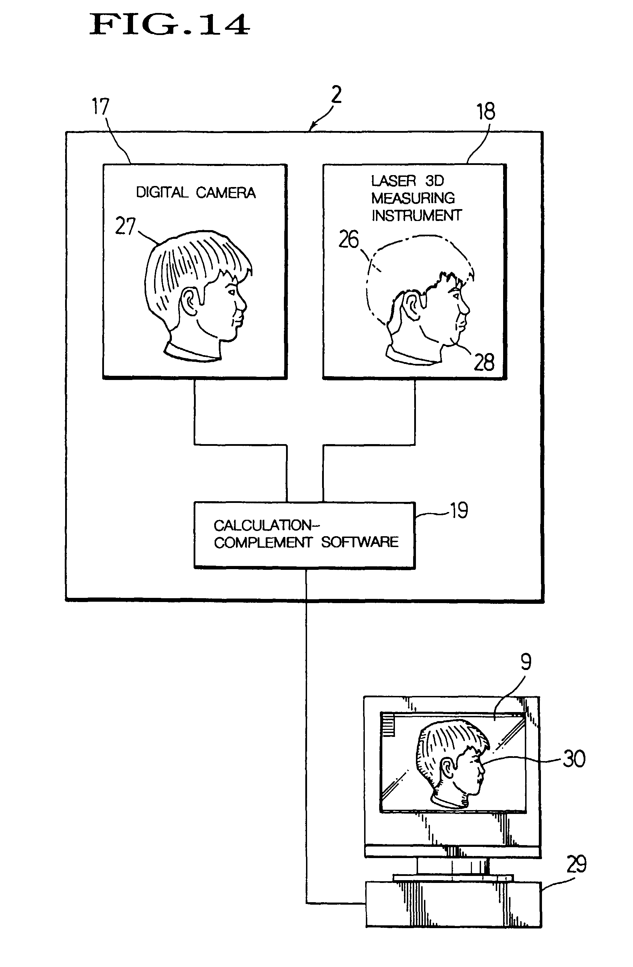

A second embodiment of the present invention is shown in FIGS. 13 and 14. It is distinguished from the first embodiment by the fact that a personal computer 29 and the monitor 9 are connected to the three-dimensional shape measuring instrument 2, and the measured data extracted from the measuring instrument 2 is used for computer graphics 30 on the monitor 9. Accordingly, the measuring instrument 2 may be used in this way.

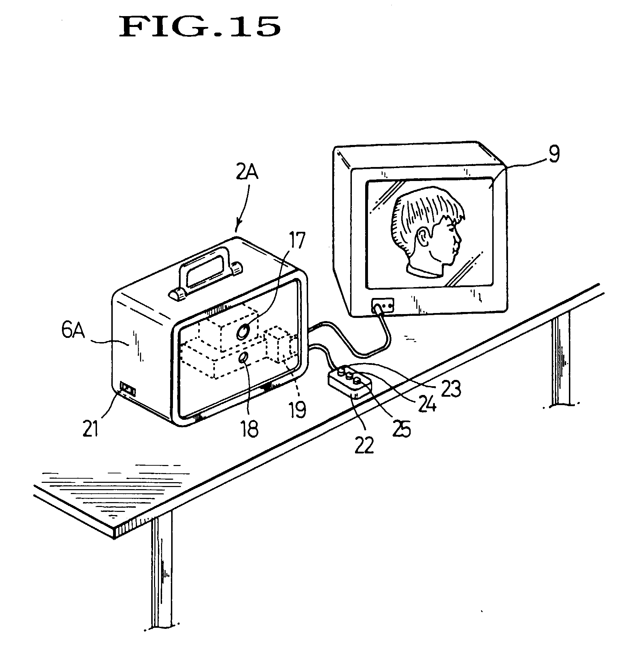

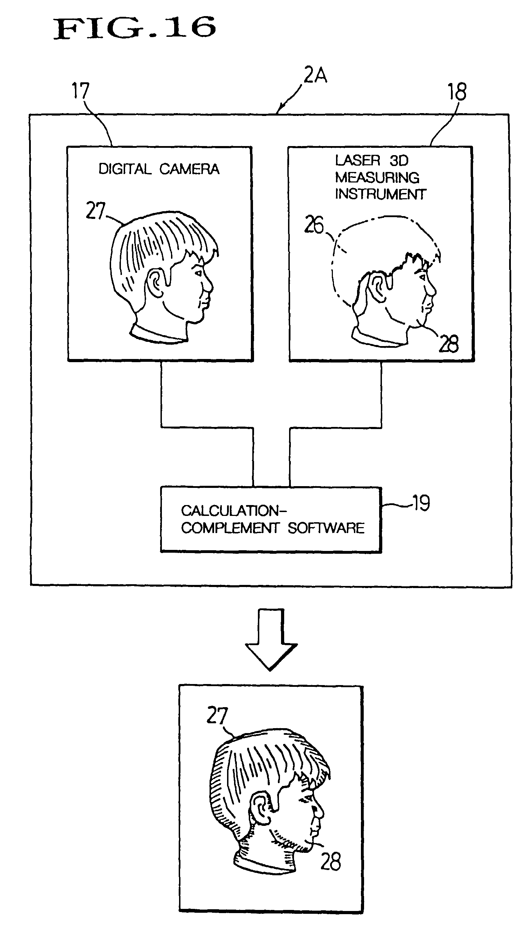

A third embodiment of the present invention is shown in FIGS. 15 and 16. It is distinguished from the first embodiment by the fact that the digital camera 17, laser three-dimensional measuring device 18 and calculation-complement software 19 are installed into a portable case 6A integrally. Accordingly, the measuring instrument 2A may be composed in this way.

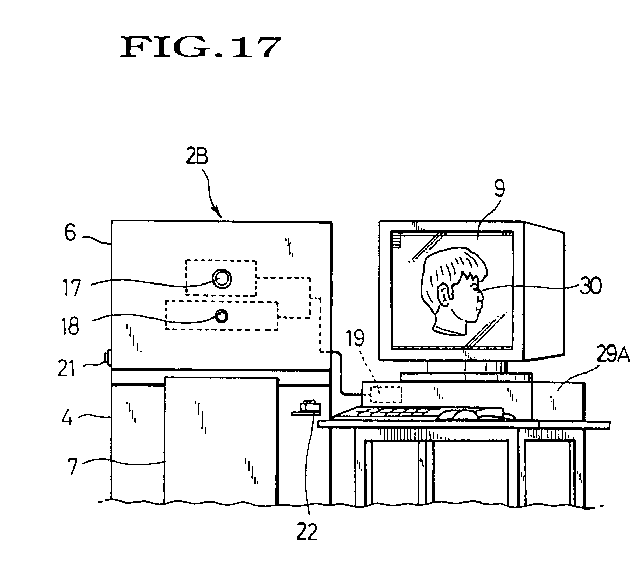

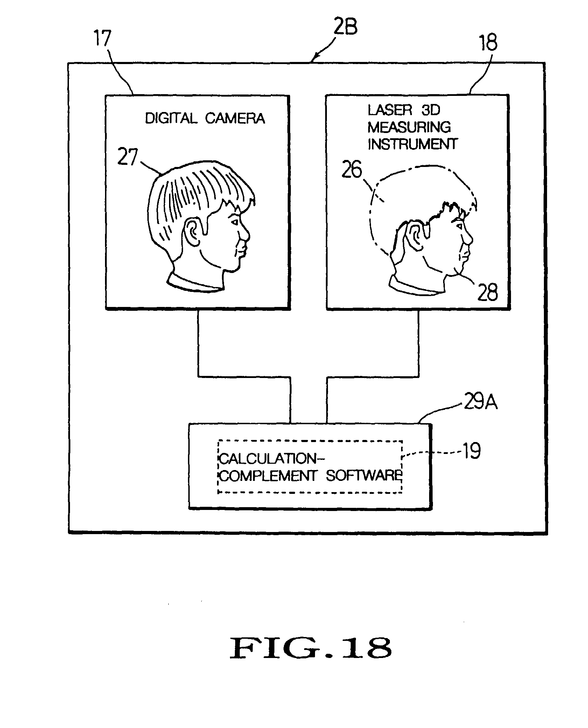

A fourth embodiment of the present invention is shown in FIGS. 17 and 18. It is distinguished from the first embodiment by the fact that the calculation-complement software 9 is installed into a personal computer 29A. This calculation-complement software 9 in this embodiment can extract the outline data from the photographed data provided by the digital camera 17, and the outline data is combined with the data extracted from the laser three-dimensional measuring device 18. Then, the space missing data in a moth- eaten state into outline data is added to the combined data and the outline data are refined. Moreover, the software 19 can extract data defining wavy shape in hair from the photographed data of the digital camera 17 and combine to the outline data and data for wavy shape in user's hair.

In addition, concerning the automatic three-dimensional engraving apparatus of the present invention, it may be able to collect the measured data through network, communication satellite or the like and convert the collected data to the exclusive data for the engraving apparatus. After that, the exclusive data is distributed respectively among each of the automatic three-dimensional engraver automatically. Then, each of solid sculpture bodies is engraved to the solid sculpture body with three-dimensional shape based on data.

As set forth above, the advantages of the invention are as follows:
(1) Since a three-dimensional shape measuring instrument comprises of a digital camera adapted to photograph an object having a three-dimensional shape and to obtain an original pattern image; a laser three-dimensional measuring instrument capable of measuring data of said object with a non-contact state; and a calculation-complement software utilizes measuring data of said three-dimensional measuring instrument and photographed pattern data to uncertain line portion by measuring said laser three-dimensional measuring instrument and outline portion, measuring instrument can measure a complete three-dimensional shape of the upper half of the body of a person or the like substantially having beautiful outline by using the digital camera and laser three-dimensional measuring instrument provided fixedly.
   Therefore, the measuring instrument can measure data with complete three-dimensional shape substantially.
(2) As discussed above, since only a digital camera and laser three-dimensional measuring instrument are fixed, the structure is simple and it is easy to install.
(3) As discussed above, the measuring instrument can measure a complete three-dimensional shape substantially even if it measures the upper half of the body of a person including a hair portion which it is difficult to measure by using a laser. Therefore, the three-dimensional shape data are used as a solid sculpture, data for computer graphics or the like.

## Claims

1. A three-dimensional shape measuring instrument comprising:
a digital camera adapted to photograph an object having a three-dimensional shape and to obtain an original pattern image;
a laser three-dimensional measuring instrument capable of measuring data of said object with a non-contact state; and
a calculation-complement software utilizes measuring data of said three-dimensional measuring instrument and photographed pattern data to uncertain line portion by measuring said laser three-dimensional measuring instrument and outline portion.

2. A three-dimensional shape measuring instrument according to claim 1, wherein said digital camera and laser three-dimensional measuring instrument to provided fixedly to a case such that said digital camera can photograph said object such as a person positioned in front thereof and said laser three-dimensional measuring instrument can measure said a three-dimensional shape of said object, and said calculation-complement software is provided into said case.
